(19) Europäisches Patentamt
European Patent Office
Office européen des brevets

(11) **EP 3 091 541 A1**

(12) **EUROPEAN PATENT APPLICATION**
published in accordance with Art. 153(4) EPC

(43) Date of publication:
**09.11.2016 Bulletin 2016/45**

(21) Application number: **14874210.9**

(22) Date of filing: **27.11.2014**

(51) Int Cl.:
*H01F 1/24* $^{(2006.01)}$     *B22F 1/00* $^{(2006.01)}$
*B22F 1/02* $^{(2006.01)}$     *B22F 3/00* $^{(2006.01)}$
*B22F 3/26* $^{(2006.01)}$     *H01F 27/255* $^{(2006.01)}$
*H01F 41/02* $^{(2006.01)}$

(86) International application number:
**PCT/JP2014/081346**

(87) International publication number:
**WO 2015/098414 (02.07.2015 Gazette 2015/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **26.12.2013 JP 2013269347**

(71) Applicant: **NTN Corporation
Osaka-shi, Osaka 550-0003 (JP)**

(72) Inventors:
• **KAKO Noritaka
Kuwana-shi
Mie 511-0867 (JP)**

• **ARAKI Hikaru
Kuwana-shi
Mie 511-0867 (JP)**
• **SHIMAZU Eiichirou
Kuwana-shi
Mie 511-0867 (JP)**

(74) Representative: **Eder Schieschke & Partner mbB
Patentanwälte
Elisabethstraße 34
80796 München (DE)**

(54) **POWDER MAGNETIC CORE AND METHOD FOR PRODUCING SAME**

(57) Provided is a powder magnetic core (1), including: a magnetic core main body (2) obtained by compression-molding raw material powder containing, as a main component, soft magnetic metal powder (3) having a surface coated with an insulating coating (4) having a decomposition temperature of 600°C or more; and a sealing part (6) configured to seal inner pores of the magnetic core main body (2), in which: the magnetic core main body (2) has a relative density of 94.5% or more and 97% or less; and the powder magnetic core (1) has a porosity of 2.0% or less.

Fig. 1

EP 3 091 541 A1

**Description**

Technical Field

The present invention relates to a powder magnetic core and a method of manufacturing the same.

Background Art

As is well known, for example, a power source circuit, which is used by being incorporated into an electric product or a mechanical product, is mounted with a transformer, a step-up transformer, a rectifier, and the like, which include various coil components (such as a choke coil and a reactor) each formed of a magnetic core and a winding wound around an outer periphery of the magnetic core which serve as main parts. In order to respond to a request for, for example, low power consumption with respect to the electric product or the mechanical product, there is a demand for improvements in magnetic characteristics of the magnetic core.

In recent years, as the magnetic core, a powder magnetic core, which has a high degree of freedom of a shape and is easy to respond to a request for miniaturization and a complicated shape, tends to be used frequently. However, the powder magnetic core is formed of a structurally coarse porous body obtained by compression-molding raw material powder containing, as a main component, soft magnetic metal powder, and hence the powder magnetic core is in most cases inferior to a so-called laminated magnetic core in which structurally dense magnetic steel plates are laminated, in terms of mechanical strength. When the mechanical strength is insufficient, the powder magnetic core is liable to break or the like at the time of handling or coiling (winding) in a manufacturing process of a coil component, and further in use of the component. In view of the foregoing, technical means for obtaining a powder magnetic core having high magnetic characteristics and mechanical strength is disclosed in, for example, Patent Literatures 1 to 3 described below.

Specifically, in each of Patent Literatures 1 and 2, there is disclosed that raw material powder containing soft magnetic metal powder, fine powder of a resin, and a lubricant (solid lubricant) is subjected to compression molding, and then a compact is heated to melt cure the resin. With this, it is expected that a powder magnetic core having high mechanical strength and magnetic characteristics can be obtained because the respective soft magnetic metal powders are bonded to each other through the resin (resin layer), which is an insulating material. In addition, in Patent Literature 3, there is a disclosure of a method of manufacturing a powder magnetic core, including: a step of compression molding soft magnetic metal powder coated with a phosphoric acid-based chemical conversion coating to obtain a compact; an annealing step of annealing the compact; and an oxidizing step of bringing the compact into contact with oxygen and water at a saturated water vapor pressure.

Citation List

> Patent Literature 1: JP 2008-66531 A
> Patent Literature 2: JP 2008-231443 A
> Patent Literature 3: JP 2012-84803 A

Summary of Invention

Technical Problem

However, as in the powder magnetic cores obtained by manufacturing methods of Patent Literatures 1 and 2, in order to secure the insulating properties (magnetic characteristics) between the respective soft magnetic metal powders and the bonding force (mechanical strength) between the respective soft magnetic metal powders through use of the resin layer, the resin layer is required to be formed into a relatively large thickness. In this case, there is a need to increase the volume ratio of the powder of the resin in the raw material powder, and hence the volume ratio of the soft magnetic metal powder in the raw material powder is inevitably small as compared to the case of not mixing the powder of the resin in the raw material powder. Therefore, there is a natural limit to densification of the powder magnetic core, that is, to an increase in strength and an increase in magnetic flux density. In addition, as disclosed in Patent Literature 3, it is effective for improving the magnetic characteristics of the powder magnetic core to perform heat treatment (annealing) for removing strain accumulated in the soft magnetic metal powder along with the compression molding or the like, but the resin layer melts or disappears when the heat treatment is performed at a temperature (for example, 600°C or more) at which the strain can be appropriately removed. Therefore, even when the heat treatment is performed, the heat treatment needs to be performed at low temperature, with the result that the magnetic characteristics of the powder magnetic core cannot be improved sufficiently.

Meanwhile, in the method disclosed in Patent Literature 3, it is expected that an increase in strength and improvement in magnetic characteristics of the powder magnetic core can be achieved because raw material powder without addition of an extra component, such as the powder of the resin, enables molding at high density, and besides, the heat treatment (annealing) can be performed at a temperature at which the strain can be appropriately removed. However, a treatment time of several tens of hours is required in order to exert an effect of the oxidation treatment on the entirety of the powder magnetic core (compact). In addition, there is a need to accurately manage and control the conditions of the treatment. Therefore, the oxidation treatment requires great treatment cost. In addition, the surface of the soft magnetic metal powder alters along with the oxidation treatment, and hence there may arise problems in that strain is generated along with the alternation, and another heat treatment is required in order to reduce stress caused by the strain and hence entails a further increase in cost.

In view of the above-mentioned circumstances, an object of the present invention is to provide a powder magnetic core having high magnetic characteristics and mechanical strength at low cost.

Solution to Problem

According to one embodiment of the present invention, as technical means for achieving the above-mentioned object, there is provided a powder magnetic core, comprising: a magnetic core main body which is obtained by compression-molding raw material powder containing, as a main component, soft magnetic metal powder having a surface coated with an insulating coating having a decomposition temperature of 600°C or more, and which has a relative density of 94.5% or more and 97% or less; and a sealing part configured to seal inner pores of the magnetic core main body, wherein the powder magnetic core has a porosity of 2.0% or less. The "relative density" as used herein is also referred to as "true density ratio" and is represented by the following relational equation.

$$\texttt{Relative density=(entire density of magnetic core main}$$
$$\texttt{body/true density)×100 [\%]}$$

With the above-mentioned configuration, heat treatment (annealing treatment) can be performed at a temperature (600°C or more) at which strain accumulated in the soft magnetic metal powder along with the compression molding can be appropriately removed. In addition, the relative density of the magnetic core main body (relative density of the magnetic core main body before formation of the sealing part) is increased up to 94.5% or more. By virtue of the foregoing, the powder magnetic core having high magnetic characteristics, specifically, the powder magnetic core having, for example, a magnetic flux density (saturation magnetic flux density) of 1.5 T or more at a magnetic field of 10,000 A/m and an iron loss of 105 W/kg or less under the conditions of a frequency of 1,000 Hz and a magnetic flux density of 1.0 T can be obtained. In addition, the powder magnetic core according to the present invention comprises the sealing part configured to seal inner pores of the magnetic core main body, and the sealing part is formed so that the powder magnetic core has a porosity of 2.0% or less. As a result, the powder magnetic core having high mechanical strength (radial crushing strength of 60 MPa or more) can be obtained. The sealing part can be formed merely by impregnating a sealing material into the inner pores of the magnetic core main body by a simple method, such as vacuum impregnation, and then curing the sealing material, and hence requires less time and cost as compared to the oxidation treatment. Accordingly, according to the present invention, the powder magnetic core having high magnetic characteristics and mechanical strength can be provided at low cost.

The reason why the upper limit of the relative density of the magnetic core main body is defined as 97% is as follows: it is difficult to stably obtain a magnetic core main body (compact) having a relative density of more than 97%; and in addition, when the relative density is more than 97%, it is difficult to impregnate the sealing material into the inner pores of the magnetic core main body, that is, it is difficult to form the sealing part contributing to an increase in strength of the powder magnetic core.

It is desired that the thickness of the insulating coating be as small as possible within a range in which an eddy current can be effectively prevented from flowing between the soft magnetic metal powders adjacent to each other in order to maintain and improve the magnetic characteristics of the powder magnetic core and increase the strength of the powder magnetic core. Therefore, the thickness of the insulating coating is set to desirably 1 nm or more and 100 nm or less, more desirably 1 nm or more and 20 nm or less.

The insulating coating having a decomposition temperature of 600°C or more may be formed of, for example, an aggregate of crystals obtained by cleaving a layered oxide. The crystals obtained by cleaving a layered oxide (for example, a swellable layered clay mineral) generally have a volume resistivity as high as $10^{12}$ $\Omega$·cm or more. Therefore, when the crystals are precipitated (deposited) on the surface of the soft magnetic metal powder, the insulating coating can be formed of an aggregate of the precipitated crystals. In addition, the crystals have a decomposition temperature of roughly 700°C or more, and further, the crystals each have a flat sheet shape having an aspect ratio

(=length/thickness) calculated by dividing its length (maximum diameter) by its thickness of at least 25 or more and have a stable thickness of from about 1 nm to about several nanometers. Therefore, when the insulating coating is formed of the aggregate of crystals obtained by cleaving a layered oxide, the insulating coating which has a small thickness but can stably exhibit high heat resistance and insulating performance can be obtained.

As described above, the sealing part may be formed by impregnating an appropriate sealing material into the inner pores of the magnetic core main body, and then curing the sealing material. However, when the viscosity of the sealing material at the time of sealing treatment is too high, the sealing material cannot be impregnated particularly into a core portion of the magnetic core main body, and hence the above-mentioned porosity cannot be secured. Accordingly, it is preferred to select and use a material having a viscosity (viscosity at the time of sealing treatment) of 100 mPa·s or less as the sealing material constituting the sealing part.

Any material having the above-mentioned viscosity or less may be used as the sealing material whether the material is an organic material or an inorganic material. As the organic sealing material, thermosetting resins may be preferably used, and of the thermosetting resins, an epoxy resin, which has high heat resistance, has few restrictions on its use environment by virtue of its resistance to an acid, alkali, and alcohol, and has high adhesiveness (adhesive) strength to a base material, is particularly preferred.

For example, iron-based powder, such as pure iron (Fe) powder, silicon steel (Fe-Si) powder, permalloy (Fe-Ni) powder, permendur (Fe-Co) powder, sendust (Fe-Al-Si) powder, or supermalloy (Fe-Mo-Ni) powder as well as amorphous powder may be used as the soft magnetic metal powder. Of those powders, it is preferred to use at least one kind selected from the group consisting of pure iron powder, silicon steel powder, and permendur powder, each of which can provide the powder magnetic core having a particularly high magnetic flux density and a particularly high magnetic permeability.

Further, according to one embodiment of the present invention, as other technical means for achieving the above-mentioned object, there is provided a method of manufacturing a powder magnetic core, the method comprising: a compression molding step of compression molding raw material powder containing, as a main component, soft magnetic metal powder having a surface coated with an insulating coating having a decomposition temperature of 600°C or more to provide a magnetic core main body having a relative density of 94.5% or more and 97% or less; a heating step of heating the magnetic core main body; and then a sealing step of forming a sealing part configured to seal inner pores of the magnetic core main body.

By adopting the above-mentioned manufacturing method, the same action and effect as those of the powder magnetic core according to the present invention described above can be effectively exhibited.

When a solid lubricant is blended in the raw material powder to be used for the molding of the magnetic core main body, a friction force between the respective soft magnetic metal powders can be reduced at the time of molding of the magnetic core main body, and hence the magnetic core main body having a high density is easily obtained. Besides, damage, peeling, or the like of the insulating coating owing to friction between the respective soft magnetic metal powders can be prevented as much as possible. Specifically, it is desired to mold the magnetic core main body by using the raw material powder containing 0.7 vol% to 5 vol% of a solid lubricant, with the balance being the soft magnetic metal powder.

Advantageous Effects of Invention

As described above, according to the present invention, the powder magnetic core having high magnetic characteristics and mechanical strength can be provided at low cost.

Brief Description of Drawings

FIG. 1 is a cross-sectional view of a powder magnetic core according to one embodiment of the present invention.
FIG. 2A is a view for schematically illustrating coated powder formed by coating a surface of soft magnetic metal powder with an insulating coating.
FIG. 2B is a view for schematically illustrating part of a production process of the coated powder illustrated in FIG. 2A.
FIG. 2C is a view for schematically illustrating a specific example of the insulating coating.
FIG. 3A is a view for schematically illustrating a magnetic core main body obtained through a compression molding step.
FIG. 3B is a view for schematically illustrating the magnetic core main body after heat treatment.
FIG. 4 is a table for showing test results of confirmation tests.

Description of Embodiments

Now, embodiments of the present invention are described with reference to the drawings.

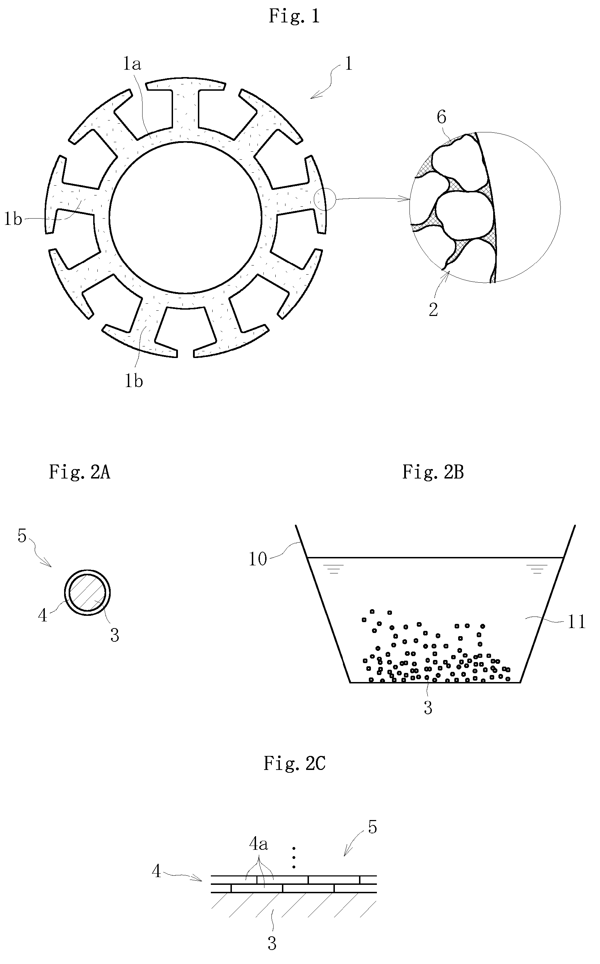

An example of a powder magnetic core according to an embodiment of the present invention is illustrated in FIG. 1. A powder magnetic core 1 illustrated in FIG. 1 is, for example, a stator core to be used by being incorporated into a stator of a motor, and comprises, as its feature in shape, in an integrated manner: a cylindrical portion 1a having an attachment surface with respect to the stator; and a plurality of protrusions 1b extending radially from the cylindrical portion 1a to the outside in a radial direction, the protrusions 1b having a coil (not shown) wound around the outer peripheries thereof. As illustrated in an enlarged view of FIG. 1, the powder magnetic core 1 is structurally formed of: a magnetic core main body 2 formed by compression-molding raw material powder (more specifically, formed by compression-molding the raw material powder, followed by heating (annealing) treatment); and a sealing part 6 configured to seal inner pores of the magnetic core main body 2. While the magnetic core main body 2 has a relative density of 94.5% or more and 97% or less, the powder magnetic core 1 has a porosity of 2.0% or less by virtue of having formed therein the sealing part 6.

The above-mentioned powder magnetic core 1 is manufactured mainly through: a raw material powder preparation step of preparing raw material powder containing, as a main component, soft magnetic metal powder having a surface coated with an insulating coating (hereinafter also referred to as "coated powder"); a compression molding step of compression molding the raw material powder to provide the magnetic core main body 2 (compact) ; a heating step of heating the magnetic core main body 2; and a sealing step of forming the sealing part 6 configured to seal inner pores of the magnetic core main body 2, in the stated order. The steps are specifically described in this order below.

[Raw Material Powder Preparation Step]

In this step, coated powder 5 (see FIG. 2A) formed of soft magnetic metal powder 3 and an insulating coating 4 configured to coat the surface of the soft magnetic metal powder 3 is produced, and the coated powder 5 and a solid lubricant are mixed by appropriate means. Thus, the raw material powder, which is a material for molding the magnetic core main body 2, is prepared. For example, one kind or a plurality of kinds selected from the group consisting of graphite, molybdenum disulfide, zinc stearate, stearamide, and the like may be used as the solid lubricant. As described above, when the raw material powder contains the solid lubricant, friction between the respective coated powders 5 can be reduced at the time of compression molding of the magnetic core main body 2 (compact), and hence the magnetic core main body 2 having a high density is easily obtained. Besides, damage or the like of the insulating coating 4 owing to the friction between the respective coated powders 5 can be prevented as much as possible.

However, when the blending amount (blending ratio) of the solid lubricant in the raw material powder is too small, specifically when the blending amount of the solid lubricant is less than 0.7 vol% with respect to 100 vol% of the total amount of the raw material powder, the above-mentioned merits exhibited through the mixing of the solid lubricant cannot be effectively enjoyed. Meanwhile, when the blending amount of the solid lubricant is more than 5 vol%, the occupation amount of the solid lubricant in the raw material powder is excessively large, and hence it becomes difficult to obtain the magnetic core main body 2 having a predetermined density. Accordingly, in this step, raw material powder containing 0.7 vol% to 5 vol% of the solid lubricant, with the balance being the coated powder 5, is produced.

The insulating coating 4 is obtained by, for example, immersing the soft magnetic metal powder 3 in a solution 11 containing a material for forming the insulating coating 4 filled in a container 10 as illustrated in FIG. 2B, and then removing a liquid component of the solution 11 adhering onto the surface of the soft magnetic metal powder 3. When the insulating coating 4 has a larger thickness, it becomes more difficult to obtain the magnetic core main body 2 having a high density, and by extension, to obtain the powder magnetic core 1 having high magnetic characteristics. Meanwhile, when the insulating coating 4 has an excessively small thickness, the insulating coating 4 is liable to break or the like at the time of compression molding of the raw material powder, and there is a risk in that an eddy current flows between the coated powders 5 (soft magnetic metal powders 3) adjacent to each other. Therefore, the thickness of the insulating coating 4 is preferably 1 nm or more and 100 nm or less, more preferably 1 nm or more and 20 nm or less.

As the soft magnetic metal powder 3, for example, there may be used iron-based powder, such as pure iron powder, silicon steel powder, permalloy powder, permendur powder, sendust powder, or supermalloy powder as well as amorphous powder. Of those powders, it is preferred to use one kind or a mixture of a plurality of kinds selected from the group consisting of pure iron powder, silicon steel powder, and permendur powder, each of which can provide the powder magnetic core 1 having a particularly high magnetic flux density and a particularly high magnetic permeability.

In addition, the soft magnetic metal powder 3 may be used without any problems irrespective of a production method by which the soft magnetic metal powder 3 is produced. Specifically, there may be used any of reduced powder produced by a reduction method, atomized powder produced by an atomizing method, and electrolytic powder produced by an electrolytic method. Of those, atomized powder, which has a relatively high purity, is excellent in removal property of strain, and facilitates molding of the magnetic core main body 2 at high density, is preferably used. The atomized powder is roughly classified into water atomized powder and gas atomized powder. The water atomized powder is excellent in moldability as compared to the gas atomized powder, and hence the magnetic core main body 2 having a high density can be obtained easily. Thus, in the case of using the atomized powder as the soft magnetic metal powder 3, in particular, the water atomized powder is most preferably selected and used.

When the soft magnetic metal powder 3 to be used has a particle diameter (number average particle diameter) of less than 30 $\mu$m, it becomes difficult to mold the magnetic core main body 2 at high density owing to poor flowability at the time of compression molding, and besides, the hysteresis loss (iron loss) of the powder magnetic core 1 increases. In addition, when the soft magnetic metal powder 3 has a particle diameter of more than 100 $\mu$m, the eddy current loss (iron loss) of the powder magnetic core 1 increases. From such viewpoints, soft magnetic metal powder having a particle diameter of 30 $\mu$m or more and 100 $\mu$m or less is used as the soft magnetic metal powder 3.

The solution 11 containing a material for forming the insulating coating 4 is produced by loading an appropriate amount of a swellable layered clay mineral among layered oxides in an appropriate solvent, such as water or an organic solvent. Herein, the swellable layered clay mineral is one kind of phyllosilicates in which negatively charged silicate crystals are laminated through intermediation of alkali metal cations or alkaline earth metal cations. When the swellable layered clay mineral is not stirred in the air or an aqueous solution, the balance between charges, that is, the lamination structure of the crystals is maintained in a stable state through neutralization of the negative charges of the crystals with the metal cations intervening between the crystals. Meanwhile, when the swellable layered clay mineral is immersed in an appropriate solvent and then stirred, the solution 11 in which the crystals are dispersed in a completely cleaved state is easily produced. That is, when the swellable layered clay mineral is immersed in an appropriate solvent and then stirred, the solution 11 in which the negatively charged crystals and the positively charged metal cations are dispersed in a completely separated state is produced.

As the swellable layered clay mineral, a swellable smectite-group mineral or a swellable mica-group mineral, which is a cation exchange-type swellable layered clay mineral, may be preferably used. The swellable smectite-group mineral is one kind of phyllosilicates in which two or more silicate layers each having a sandwich-type three-layered structure in which a magnesium (or aluminum) octahedral layer is sandwiched between silica tetrahedral layers are laminated and crystallized, and typical examples thereof may include hectorite, montmorillonite, saponite, stevensite, beidellite, nontronite, and bentonite. Any of the swellable smectite-group minerals exemplified above may be used. Of those, when the insulating coating 4 is formed of an aggregate of crystals of saponite, which is a layered silicate synthesized from inorganic compounds of Si, Mg, and Al, there is an advantage in that the powder magnetic core 1 having a small eddy current loss (iron loss) is obtained as compared to the case of forming the insulating coating 4 of an aggregate of crystals of hectorite formed of inorganic compounds of Si, Mg, and Li.

In addition, the swellable mica-group mineral is one kind of phyllosilicates in which composite layers in each of which a magnesium octahedral layer is sandwiched between paired tetrahedral layers (each tetrahedral layer is formed of six silica tetrahedrons continuing into each other in the same direction) are laminated and crystallized, and typical examples thereof may include Na-type tetrasilicic fluorine mica, Li-type tetrasilicic fluorine mica, Na-type fluorine taeniolite, Li-type fluorine taeniolite, and vermiculite. Other than the swellable smectite-group mineral and the swellable mica-group mineral, a layered silicate mineral having a similar structure to those of the minerals, or a substituted product, a derivative, or a modified product thereof may be used. In addition, one kind of the swellable layered clay minerals may be used alone, or two or more kinds thereof may be used as a mixture.

Incidentally, crystals constituting the smectite-group mineral each have a flat sheet shape having an aspect ratio (=length/thickness) calculated by dividing its length (maximum diameter) by its thickness of at least 25 or more, and have a stable thickness of about 1 nm. In addition, crystals constituting the mica-group mineral each have a flat sheet shape having an aspect ratio of at least 100 or more, and have a stable thickness of about 10 nm. When the insulating coating 4 has a smaller thickness and a denser structure, the powder magnetic core 1 having excellent magnetic characteristics is obtained more easily. Therefore, crystals 4a constituting the insulating coating 4 each preferably have a thickness and a length of 1 nm or less and 50 nm or less, respectively. From such viewpoint, of the swellable smectite-group mineral and the swellable mica-group mineral, crystals obtained by cleaving the swellable smectite-group mineral are particularly preferably used as the crystals 4a.

Then, when the soft magnetic metal powder 3 is immersed in the solution 11 produced in the above-mentioned embodiment, as illustrated in FIG. 2C, the crystals 4a dispersed in the solution 11 in a completely cleaved state are sequentially precipitated and deposited on the surface of the soft magnetic metal powder 3.

Crystals constituting the layered oxide (swellable layered clay mineral) have a volume resistivity as high as $10^{12}$ $\Omega\cdot$cm or more. Therefore, when the soft magnetic metal powder 3 is taken out from the solution 11 after the crystals 4a are precipitated and deposited on the surface of the soft magnetic metal powder 3, and then the liquid component of the solution 11 is removed, the insulating coating 4 configured to coat the surface of the soft magnetic metal powder 3 is formed of an aggregate of the precipitated crystals 4a. The crystals 4a constituting the layered oxide have a decomposition temperature of roughly 700°C or more, and further, each of the crystals 4a has a thin flat sheet shape and a stable thickness of from about several nanometers to about 10 nm as described above. Therefore, the insulating coating 4 formed of the aggregate of the crystals 4a has (can exhibit) high heat resistance and insulating performance even when having a small thickness.

The crystals 4a may be precipitated and deposited on the surface of the soft magnetic metal powder 3 more than necessary depending on an immersion time of the soft magnetic metal powder 3, the concentration of the solution 11, or the like. However, the crystals 4a each ionically bonded to an alkali metal cation, an alkaline earth metal cation, or the like are easily cleaved from each other in the presence of a solvent, and hence can be relatively easily removed as compared to the crystals 4a each ionically bonded to the soft magnetic metal powder 3. Therefore, when the crystals 4a are precipitated more than necessary, the thickness of the insulating coating 4 can be reduced, for example, merely by exposing the crystals 4a to flowing water to cause delamination between the laminated crystals 4a. That is, when the insulating coating 4 is formed of the aggregate of the crystals 4a obtained by cleaving the layered oxide, the thickness of the insulating coating 4 can be simply controlled, and hence there is also an advantage in that the insulating coating 4 having a predetermined thickness can be easily obtained.

[Compression Molding Step]

In this step, the raw material powder produced in the raw material powder production step described above is subjected to compression molding through use of a mold comprising a die, upper and lower punches, and a core coaxially arranged to provide a compact (magnetic core main body 2) having a shape close to that of the powder magnetic core 1, while detailed illustration is omitted. The molding pressure of the raw material powder is set to 980 MPa ormore. However, when the molding pressure is too high (for example, when the molding pressure is more than 2,000 MPa), the following problems are liable to arise: the durability life of the mold is shortened; insulating properties lower owing to breakage or the like of the insulating coating 4 constituting the coated powder 5; and the like. Therefore, the molding pressure of the raw material powder is set to 980 MPa or more and 2,000 MPa or less. The compression molding of the raw material powder may be performed through use of a mold in which inner wall surfaces (surfaces defining a cavity) are lubricated, or a mold heated to an appropriate temperature.

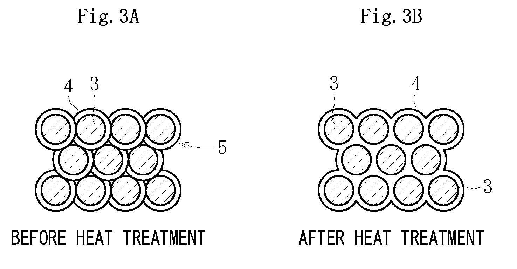

When the raw material powder is subjected to compression molding as described above, as schematically illustrated in FIG. 3A, the magnetic core main body 2 having a high density in which the respective coated powders 5 are firmly brought into close contact with each other, more specifically, the magnetic core main body 2 having a relative density of 94.5% or more and 97% or less is obtained. The reason why the upper limit of the relative density of the magnetic core main body 2 is defined as 97% is as follows: it is difficult to stably obtain the magnetic core main body 2 (compact) having a relative density of more than 97%; and in addition, when the relative density is more than 97%, it is difficult to impregnate the sealing material into the inner pores of the magnetic core main body 2 in a sealing part formation step described below, that is, it is difficult to form the sealing part 6 which can be expected to have an effect of increasing the strength of the powder magnetic core 1.

[Heating Step]

In this step, heat treatment (annealing treatment) for heating the magnetic core main body 2 in an atmosphere of an inert gas, such as nitrogen gas, or under a vacuum at a predetermined temperature or more is performed. The heating temperature of the magnetic core main body 2 is set to 600°C or more. With this, strain (crystal strain) accumulated in the soft magnetic metal powder 3 is appropriately removed through the compression molding step and the like. In order to remove the strain accumulated in the soft magnetic metal powder 3 almost completely, it is sufficient that the magnetic core main body 2 be heated at a recrystallization temperature or more and a melting point or less of the soft magnetic metal powder 3. For example, in the case of using pure iron powder as the soft magnetic metal powder 3, the magnetic core main body 2 is heated at 700°C or more. Even when the magnetic core main body 2 is heated at such high temperature, the situation in which the insulating coating 4 is damaged, decomposed, peeled, or the like can be prevented as much as possible because the insulating coating 4 is formed of the aggregate of the crystals 4a having a decomposition temperature of more than 700°C in this embodiment.

When the magnetic core main body 2 is heated at the above-mentioned temperature, the solid lubricant in the magnetic core main body 2 disappears, and hence pores are formed in portions of the magnetic core main body 2 in which the solid lubricant is present before the heat treatment. Even when the pores are formed in the above-mentioned embodiment, the situation in which the density of the magnetic core main body 2 largely lowers is prevented as much as possible because the blending amount of the solid lubricant in the raw material powder is significantly small as compared to the blending amount of the coated powder 5.

In addition, when the heat treatment is performed at a heating temperature of about 700°C, strain accumulated in the soft magnetic metal powder 3 is almost completely removed, and at the same time, as schematically illustrated in FIG. 3B, the insulating coating 4 (the individual crystal 4a constituting the insulating coating 4) is bonded to the adjacent insulating coating 4 (crystal 4a) through a condensation reaction. Thus, the mechanical strength of the magnetic core main body 2, and by extension, the mechanical strength of the powder magnetic core 1 can be increased.

[Sealing Part Formation Step]

In this step, the magnetic core main body 2 is subjected to sealing treatment, to form the sealing part 6 configured to seal the inner pores of the magnetic core main body 2. Specifically, the sealing part 6 is formed by, for example, a procedure as described below, while illustration is omitted. First, a container filled with the sealing material (for example, a thermosetting resin described below) is arranged in a vacuum chamber, and the magnetic core main body 2 is immersed in the container. Then, pressure in the vacuum chamber is reduced until a vacuum state is achieved, and the state is continued for a predetermined time. With this, air in the inner pores of the magnetic core main body 2 is replaced with the sealing material, and the inner pores of the magnetic core main body 2 are almost filled with the sealing material. Then, the magnetic core main body 2 in which inner pores are impregnated with the sealing material is opened to the air, and then heated for a predetermined time and thus the sealing material is cured. With this, the powder magnetic core 1 comprising the magnetic core main body 2 and the sealing part 6 configured to seal the inner pores of the magnetic core main body 2 is obtained. The sealing treatment is performed so that the porosity of the powder magnetic core 1 is 2% or less.

For example, a thermosetting resin (more specifically, one obtained by mixing a curing agent with a thermosetting resin serving as a base) may be used as the sealing material. An epoxy resin, an acrylic resin, a phenol resin, a benzoxazine resin, an unsaturated polyester resin, and the like may be used as the thermosetting resin. Of the exemplified thermosetting resins, an epoxy resin, which has high heat resistance, has few restrictions on its use environment by virtue of its resistance to an acid, alkali, and alcohol, and has high adhesiveness (adhesive) strength to the other material, is particularly suitably used. The thermosetting resin typified by the epoxy resin is often used by being diluted with an appropriate solvent in order to enhance its handleability, but such case is not preferred because pores are generated in the sealing part 6 itself when the solvent volatilizes along with the heat treatment for curing. Therefore, a low-viscosity thermosetting resin without the need for dilution at the time of sealing treatment, specifically, a thermosetting resin having a viscosity at 25°C of 100 mPa·s or less is used.

As the epoxy resin constituting the sealing material, an epoxy resin achieving a balance between mechanical strength and heat resistance, specifically, a combination of a polyfunctional epoxy resin which is trifunctional or more and a bifunctional epoxy resin is preferred. For example, a phenol novolac-type epoxy resin may be used as the polyfunctional epoxy resin, and for example, a bisphenol A-type epoxy resin or a bisphenol F-type epoxy resin may be used as the bifunctional epoxy resin. Meanwhile, for example, any one kind or a mixture of a plurality of kinds selected from the group of curing agents each capable of causing polyaddition-type polymerization, such as an amine compound, an acid anhydride, a phenol, mercaptan, and an isocyanate, and curing agents each of which functions as an initiator of anionic polymerization or cationic polymerization, such as a tertiary amine, imidazole, and a Lewis acid, may be used as the curing agent. Of the exemplified curing agents, in particular, an acid anhydride has low volatility and a long usable time, and in addition, is excellent in heat resistance and electric and mechanical properties as compared to an amine. Accordingly, the acid anhydride is particularly preferred as the curing agent.

The above-mentioned sealing material containing the epoxy resin as a base has a volume resistivity of $10^6$ $\Omega \cdot m$ or more. Therefore, when the inner pores of the magnetic core main body 2 are sealed with the sealing part 6 formed by curing the sealing material, the insulating properties between the soft magnetic metal powders 3 (coated powders 5) adjacent to each other can be improved. That is, even when the insulating coating 4 constituting the magnetic core main body 2 is damaged or the like, insulating properties required for the powder magnetic core 1 can be secured through the sealing part 6.

Through the above-mentioned steps, the powder magnetic core 1, comprising: the magnetic core main body 2 which is obtained by compression-molding the raw material powder containing, as a main component, the soft magnetic metal powder 3 having a surface coated with the insulating coating 4 having a decomposition temperature of 600°C or more, and which has a relative density of 94.5% or more and 97% or less; and the sealing part 6 configured to seal the inner pores of the magnetic core main body 2, in which the powder magnetic core 1 has a porosity of 2.0% or less, is obtained.

In addition, as described above, according to the present invention, raw material powder mainly containing the soft magnetic metal powder 3 having a surface coated with the insulating coating 4 having a decomposition temperature of 600°C or more is used as powder for molding the magnetic core main body 2 (raw material powder), and hence the heat treatment (annealing treatment) can be performed at a temperature (600°C or more) at which strain accumulated in the soft magnetic metal powder 3 along with the compression molding can be appropriately removed. In addition, the relative density of the magnetic core main body 2 (relative density of the magnetic core main body before the formation of the sealing part) is increased up to 94.5% or more. From the foregoing, the powder magnetic core 1 having high magnetic characteristics, specifically, the powder magnetic core 1 having, for example, a magnetic flux (saturation magnetic flux density) of 1.5 T or more at a magnetic field of 10, 000 A/m and an iron loss of 105 W/kg or less under the conditions of a frequency of 1,000 Hz and a magnetic flux density of 1.0 T can be obtained. In addition, the powder magnetic core 1 according to the present invention comprises the sealing part 6 configured to seal the inner pores of the magnetic core main body 2, and the sealing part 6 is formed so that the powder magnetic core 1 has a porosity of 2.0% or less. As a result, the powder magnetic core 1 having high mechanical strength (radial crushing strength of 60 MPa or more) can be obtained. The sealing part 6 can be formed merely by impregnating the sealing material into the inner pores of the magnetic core main body 2 by a simple method, such as vacuum impregnation, and then curing the sealing material, and hence requires less time and cost as compared to oxidation treatment. Accordingly, according to the present invention, the powder magnetic core 1 having high magnetic characteristics and mechanical strength can be provided at low cost.

The powder magnetic core obtained by using powder 1 for a magnetic core according to the present invention has sufficiently increased mechanical strength in addition to the magnetic characteristics, as described above. Therefore, the powder magnetic core can be preferably used as magnetic cores of motors for vehicles having a high rotation speed and a high acceleration and being exposed to vibration constantly, such as automobiles and railroad vehicles, as well as magnetic cores of components for power source circuits, such as a choke coil, a power inductor, and a reactor. The powder magnetic core has a high degree of freedom of a shape, and hence not only the stator core as illustrated in FIG. 1 but also a core having a more complicated shape can be easily mass-produced.

In the foregoing, the powder magnetic core 1 according to one embodiment of the present invention and the manufacturing method therefor have been described, and the powder magnetic core and the manufacturing method therefor can be appropriately modified within the range not departing from the spirit of the present invention.

For example, the insulating coating 4 configured to coat the surface of the soft magnetic metal powder 3 may be formed of a compound, such as iron oxide ($Fe_2O_3$), sodium silicate ($Na_2SiO_3$), potassium sulfate ($K_2SO_4$), sodium borate ($Na_2B_4O_7$), potassium carbonate ($K_2CO_3$), boron phosphate ($BPO_4$), or iron sulfide ($FeS_2$). The exemplified compounds each have a decomposition temperature of more than 700°C, and hence the heat treatment can be performed at a temperature at which strain accumulated in the soft magnetic metal powder 3 along with the compression molding can be almost completely removed.

When the magnetic core main body 2 in which the insulating coating 4 is formed of iron oxide or the like described above is heated at 700°C or more, strain accumulated in the soft magnetic metal powder 3 is removed, and at the same time, the respective insulating coatings 4 are joined to each other in a solid phase state without being liquefied, with the result that the powder magnetic core 1 (magnetic core main body 2) having high strength and excellent magnetic characteristics can be obtained. The solid phase joined state between the respective insulating coatings 4 is achieved by solid phase sintering or a dehydration condensation reaction, and whether the respective insulating coatings 4 are joined to each other through solid phase sintering or dehydration condensation depends on the kind of the compound used for the formation of the insulating coating 4.

In addition, while the sealing part 6 is formed by impregnating an organic sealing material into the inner pores of the magnetic core main body 2 and then curing the sealing material in the embodiment described above, the sealing part 6 may be formed by impregnating an inorganic sealing material into the inner pores of the magnetic core main body 2 and then curing the sealing material. As the inorganic sealing material, for example, a glass-based sealing material may be used.

Examples

In order to verify the usefulness of the present invention, ring-shaped test pieces (Examples 1 to 7) corresponding to the powder magnetic core according to the present invention and ring-shaped test pieces (Comparative Examples 1 and 2) corresponding to a powder magnetic core not having the configuration of the present invention were produced, and for each of the test pieces, (1) porosity, (2) iron loss, (3) magnetic flux density, and (4) radial crushing strength were calculated and measured as described below.

(1) Porosity

The porosity was calculated based on a ratio between the volume of pores in a ring-shaped test piece before sealing treatment and the volume of a resin penetrating into the inner pores of the ring-shaped test piece through the sealing treatment.

(2) Iron Loss

The iron loss [W/kg] at a frequency of 1,000 Hz was measured with an AC B-H measurement device (B-H analyzer SY-8218 manufactured by Iwatsu Test Instruments Corporation).

(3) Magnetic Flux Density

The magnetic flux density [T] at a magnetic field of 10,000 A/m was measured with a DC B-H measurement device (SK-110 type manufactured by Metron Inc.).

(4) Radial Crushing Strength

A compression force (compression speed: 1.0 mm/min) in a reduced diameter direction was applied to an outer peripheral surface of each ring-shaped test piece through use of a precision universal tester Autograph manufactured by Shimadzu Corporation, and the radial crushing strength [MPa] was calculated by dividing the compression force by a broken cross-sectional area.

Next, a procedure for producing each of the ring-shaped test pieces according to Examples 1 to 7 and Comparative Examples 1 and 2 is described.

[Example 1]

Coated powder formed of soft magnetic metal powder and an insulating coating configured to coat the surface of the soft magnetic metal powder was obtained by coating the surface of water atomized iron powder (number average particle diameter: 60 μm) having a purity of 98% or more with an aggregate of crystals obtained by cleaving a layered oxide (swellable layered clay mineral). Next, raw material powder containing 2.5 vol% of stearamide as a solid lubricant, with the balance being the coated powder (and inevitable impurities) was loaded in a mold and subjected to compression molding at a molding pressure of 1,176 MPa, and then subjected to heat (annealing) treatment under the conditions of 600°C×10 min. Thus, a magnetic core main body (compact) having an outer diameter dimension, an inner diameter dimension, and a thickness of 20 mm, 12 mm, and 7 mm, respectively and having a relative density of about 96.5% was obtained. Next, the magnetic core main body was immersed in an epoxy resin (viscosity: 70 mPa·s or less) in a molten state and then vacuuming was performed for 60 min. Thus, the epoxy resin serving as a sealing material was impregnated into the inner pores of the magnetic core main body, and then the resultant magnetic core main body was left in the air for 60 min. Finally, the epoxy resin was cured by heating the magnetic core main body at each of 80°C and 130°C for 2 hours, to form a sealing part. Thus, the ring-shaped test piece of Example 1 was obtained.

[Example 2]

The ring-shaped test piece of Example 2 was produced by the same procedure as the procedure for obtaining the test piece according to Example 1 except that the vacuuming time was changed to 30 min.

[Example 3]

The ring-shaped test piece of Example 2 was produced by the same procedure as the procedure for obtaining the test piece according to Example 1 except that the vacuuming time was changed to 5 min.

[Example 4]

The ring-shaped test piece of Example 4 was produced by the same procedure as the procedure for obtaining the test piece according to Example 1 except that the molding pressure of the raw material powder was changed to 980 MPa.

[Example 5]

The ring-shaped test piece of Example 5 was produced by the same procedure as the procedure for obtaining the test piece according to Example 1 except that an acrylic resin was used as the sealing material.

[Example 6]

The ring-shaped test piece of Example 6 was produced by the same procedure as the procedure for obtaining the test piece according to Example 1 except that a glass-based sealing material was used as the sealing material.

[Example 7]

The ring-shaped test piece of Example 7 was produced by the same procedure as the procedure for obtaining the test piece according to Example 1 except that mixed powder of the above-mentioned pure iron powder and iron powder containing 6.5 mass% of silicon was used as the soft magnetic metal powder.

[Comparative Example 1]

The ring-shaped test piece of Comparative Example 1 was produced by the same procedure as the procedure for obtaining the test piece according to Example 1 except that the molding pressure of the raw material powder was changed to 884 MPa.

[Comparative Example 2]

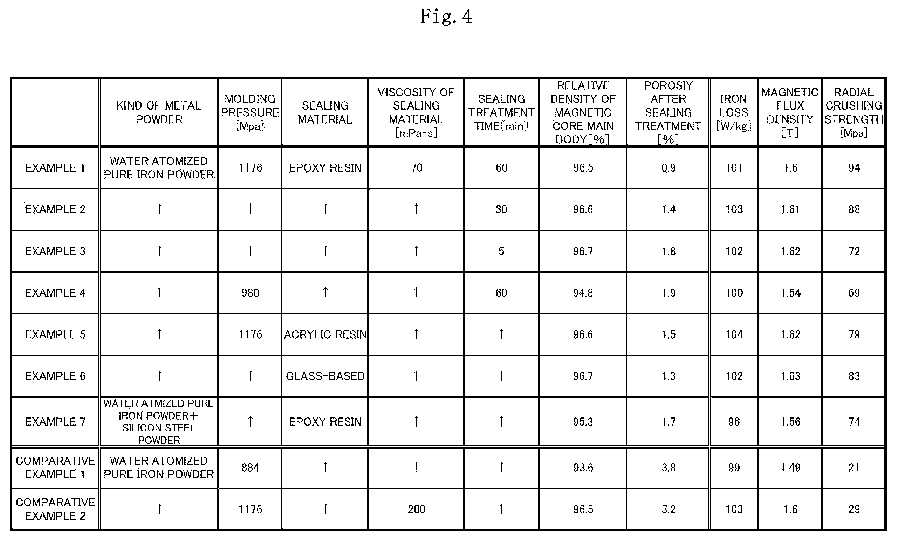

The ring-shaped test piece of Comparative Example 2 was produced by the same procedure as in Example 1 except that the sealing treatment was performed by using a sealing material having a viscosity 200 mPa·s.
The relative density (relative density before the sealing treatment) of the magnetic core main body, porosity, iron loss, magnetic flux density, and radial crushing strength of each of the test pieces according to Examples 1 to 6 and Comparative Examples 1 and 2 produced by the above-mentioned procedures are summarized in FIG. 4. As apparent also from FIG. 4, in Examples 1 to 7 each having the configuration of the present invention, high mechanical strength (radial crushing strength of 60 MPa or more) and high magnetic characteristics (a magnetic flux density of 1.5 T or more at a magnetic field of 10,000 A/m and an iron loss of 105 W/kg or less under the conditions of a frequency of 1,000 Hz and a magnetic flux density of 1.0 T) were able to be achieved at the same time. Meanwhile, in Comparative Examples 1 and 2 each not having the configuration of the present invention, the strength was particularly remarkably insufficient. The cause for this is presumed as follows: in Comparative Example 1, the relative density of the magnetic core main body is as small as 93.6%, and hence it is considered that the inner pores of the magnetic core main body cannot be sealed sufficiently even through the sealing treatment under the same conditions as in Example 1, and necessary and sufficient mechanical strength cannot be secured. Inaddition, it is considered that the results of magnetic characteristics (in particular, magnetic flux density) are inferior to the results of Examples 1 to 7 because the relative density of the magnetic core main body is as small as 93.6%. In addition, in Comparative Example 2, the sealing material having a high viscosity is used for the sealing treatment, and hence it is considered that the inner pores of the magnetic core main body cannot be sealed sufficiently, and necessary and sufficient mechanical strength cannot be secured.
Based on the above-mentioned test results, it can be said that the present invention is extremely useful in that the present invention enables the powder magnetic core excellent in mechanical strength and magnetic characteristics to be obtained at low cost.

Reference Signs List

| | |
|---|---|
| 1 | powder magnetic core |
| 2 | magnetic core main body |
| 3 | soft magnetic metal powder |
| 4 | insulating coating |
| 4a | crystal |
| 5 | coated powder |
| 6 | sealing part |

**Claims**

1. A powder magnetic core, comprising:

a magnetic core main body, which is obtained by compression-molding raw material powder containing, as a main component, soft magnetic metal powder having a surface coated with an insulating coating having a decomposition temperature of 600°C or more, and which has a relative density of 94.5% or more and 97% or less; and
a sealing part configured to seal inner pores of the magnetic core main body,

wherein the powder magnetic core has a porosity of 2.0% or less.

2. The powder magnetic core according to claim 1, wherein the insulating coating has a thickness of 1 nm or more and 100 nm or less.

3. The powder magnetic core according to claim 1 or 2, wherein the insulating coating is formed of an aggregate of crystals obtained by cleaving a layered oxide.

4. The powder magnetic core according to any one of claims 1 to 3, wherein the sealing part is formed by curing a sealing material having a viscosity of 100 mPa·s or less.

5. The powder magnetic core according to claim 4, wherein the sealing material comprises an epoxy-based resin.

6. A powder for a magnetic core according to any one of claims 1 to 5, wherein the soft magnetic metal powder comprises at least one kind selected from the group consisting of pure iron powder, silicon steel powder, and permendur powder.

7. A method of manufacturing a powder magnetic core, the method comprising:

   a compression molding step of compression molding raw material powder containing, as a main component, soft magnetic metal powder having a surface coated with an insulating coating having a decomposition temperature of 600°C or more to provide a magnetic core main body having a relative density of 94.5% or more and 97% or less;
   a heating step of heating the magnetic core main body; and then
   a sealing step of forming a sealing part configured to seal inner pores of the magnetic core main body.

8. The method of manufacturing a powder magnetic core according to claim 7, wherein the compression molding step comprises compression molding the raw material powder at a molding pressure of 980 MPa or more.

9. The method of manufacturing a powder magnetic core according to claim 7 or 8, wherein the compression molding step comprises compression molding raw material powder containing 0.7 vol% to 5 vol% of a solid lubricant, with the balance being the soft magnetic metal powder, to provide the magnetic core main body.

Fig. 1

Fig. 2A

Fig. 2B

Fig. 2C

Fig. 3A

Fig. 3B

BEFORE HEAT TREATMENT

AFTER HEAT TREATMENT

Fig. 4

| | KIND OF METAL POWDER | MOLDING PRESSURE [Mpa] | SEALING MATERIAL | VISCOSITY OF SEALING MATERIAL [mPa·s] | SEALING TREATMENT TIME [min] | RELATIVE DENSITY OF MAGNETIC CORE MAIN BODY [%] | POROSIY AFTER SEALING TREATMENT [%] | IRON LOSS [W/kg] | MAGNETIC FLUX DENSITY [T] | RADIAL CRUSHING STRENGTH [Mpa] |
|---|---|---|---|---|---|---|---|---|---|---|
| EXAMPLE 1 | WATER ATOMIZED PURE IRON POWDER | 1176 | EPOXY RESIN | 70 | 60 | 96.5 | 0.9 | 101 | 1.6 | 94 |
| EXAMPLE 2 | ↑ | ↑ | ↑ | ↑ | 30 | 96.6 | 1.4 | 103 | 1.61 | 88 |
| EXAMPLE 3 | ↑ | ↑ | ↑ | ↑ | 5 | 96.7 | 1.8 | 102 | 1.62 | 72 |
| EXAMPLE 4 | ↑ | 980 | ↑ | ↑ | 60 | 94.8 | 1.9 | 100 | 1.54 | 69 |
| EXAMPLE 5 | ↑ | 1176 | ACRYLIC RESIN | ↑ | ↑ | 96.6 | 1.5 | 104 | 1.62 | 79 |
| EXAMPLE 6 | ↑ | ↑ | GLASS-BASED | ↑ | ↑ | 96.7 | 1.3 | 102 | 1.63 | 83 |
| EXAMPLE 7 | WATER ATMIZED PURE IRON POWDER＋SILICON STEEL POWDER | ↑ | EPOXY RESIN | ↑ | ↑ | 95.3 | 1.7 | 96 | 1.56 | 74 |
| COMPARATIVE EXAMPLE 1 | WATER ATOMIZED PURE IRON POWDER | 884 | ↑ | ↑ | ↑ | 93.6 | 3.8 | 99 | 1.49 | 21 |
| COMPARATIVE EXAMPLE 2 | ↑ | 1176 | ↑ | 200 | ↑ | 96.5 | 3.2 | 103 | 1.6 | 29 |

**INTERNATIONAL SEARCH REPORT**

| International application No. |
|---|
| PCT/JP2014/081346 |

| A. CLASSIFICATION OF SUBJECT MATTER |
|---|
| *H01F1/24*(2006.01)i, *B22F1/00*(2006.01)i, *B22F1/02*(2006.01)i, *B22F3/00* (2006.01)i, *B22F3/26*(2006.01)i, *H01F27/255*(2006.01)i, *H01F41/02*(2006.01)i |

According to International Patent Classification (IPC) or to both national classification and IPC

| B. FIELDS SEARCHED |
|---|
| Minimum documentation searched (classification system followed by classification symbols) |
| H01F1/24, B22F1/00, B22F1/02, B22F3/00, B22F3/26, H01F27/255, H01F41/02 |

Documentation searched other than minimum documentation to the extent that such documents are included in the fields searched

| Jitsuyo Shinan Koho | 1922–1996 | Jitsuyo Shinan Toroku Koho | 1996–2015 |
| Kokai Jitsuyo Shinan Koho | 1971–2015 | Toroku Jitsuyo Shinan Koho | 1994–2015 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| Y | WO 2013/118677 A1 (NTN Corp.), 15 August 2013 (15.08.2013), entire text; all drawings & JP 2014-116573 A & CN 104081476 A | 1-9 |
| Y | JP 2013-204063 A (NTN Corp.), 07 October 2013 (07.10.2013), entire text; all drawings & WO 2013/146809 A1 | 1-9 |
| Y | JP 5032711 B1 (Taiyo Yuden Co., Ltd.), 06 July 2012 (06.07.2012), entire text; all drawings & JP 2013-33902 A & US 2014/0104031 A1 & WO 2013/005454 A & TW 201303916 A & KR 10-2014-0007962 A & CN 103650074 A | 1-9 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 16 February 2015 (16.02.15) | 10 March 2015 (10.03.15) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (July 2009)

**INTERNATIONAL SEARCH REPORT**

International application No.

PCT/JP2014/081346

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2009/128427 A1 (Toho Zinc Co., Ltd.), 22 October 2009 (22.10.2009), entire text; all drawings & JP 5358562 B & US 2011/0024671 A1 & DE 112009000919 T & CN 102007550 A | 1-9 |
| A | JP 2013-30563 A (Sumitomo Electric Industries, Ltd.), 07 February 2013 (07.02.2013), entire text; all drawings & JP 5032690 B & US 2014/0191839 A & EP 2750151 A1 & WO 2013/014813 A & CN 103718259 A & KR 10-2014-0041612 A | 1-9 |
| A | JP 2013-27896 A (Sumitomo Electric Industries, Ltd.), 07 February 2013 (07.02.2013), entire text; all drawings (Family: none) | 1-9 |
| A | JP 2008-195986 A (Hitachi Metals, Ltd.), 28 August 2008 (28.08.2008), entire text; all drawings (Family: none) | 1-9 |
| A | JP 2005-150257 A (Fuji Electric Holdings Co., Ltd.), 09 June 2005 (09.06.2005), entire text; all drawings (Family: none) | 1-9 |
| A | JP 2004-162174 A (Denso Corp.), 10 June 2004 (10.06.2004), entire text; all drawings & US 2004/0086412 A1 & DE 10349594 A & CN 1499543 A | 1-9 |
| P,A | JP 2014-72367 A (Hitachi Chemical Co., Ltd.), 21 April 2014 (21.04.2014), entire text; all drawings (Family: none) | 1-9 |

Form PCT/ISA/210 (continuation of second sheet) (July 2009)

**EP 3 091 541 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008066531 A
- JP 2008231443 A
- JP 2012084803 A